(19) **Europäisches Patentamt European Patent Office Office européen des brevets**

(11) **EP 4 607 171 A1**

(12) **EUROPEAN PATENT APPLICATION**
published in accordance with Art. 153(4) EPC

(43) Date of publication:
**27.08.2025 Bulletin 2025/35**

(21) Application number: **23893371.7**

(22) Date of filing: **13.09.2023**

(51) International Patent Classification (IPC):
**G01M 11/02** (2006.01)    **G01B 9/00** (2006.01)
**G01B 11/24** (2006.01)    **G01N 21/00** (2006.01)
**G02B 27/01** (2006.01)    **B60R 1/00** (2022.01)
**G06T 7/80** (2017.01)    **H04N 17/00** (2006.01)

(52) Cooperative Patent Classification (CPC):
**G01B 9/00; G01B 11/24; G01M 11/02; G01N 21/00; G01N 21/88;** B60R 1/00; G02B 27/01; G06T 7/80; H04N 17/00

(86) International application number:
**PCT/CN2023/118521**

(87) International publication number:
**WO 2024/109278 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.11.2022 CN 202211473751**

(71) Applicant: **Fuyao Glass Industry Group Co., Ltd. Fuqing, Fujian 350300 (CN)**

(72) Inventors:
• **HE, Changlong**
  **Fuqing, Fujian 350300 (CN)**
• **GUAN, Jinliang**
  **Fuqing, Fujian 350300 (CN)**
• **ZHANG, Canzhong**
  **Fuqing, Fujian 350300 (CN)**
• **ZHANG, Wei**
  **Fuqing, Fujian 350300 (CN)**

(74) Representative: **Patentanwälte Olbricht Buchhold Keulertz Partnerschaft mbB Neue Mainzer Straße 75 60311 Frankfurt am Main (DE)**

(54) **OPTICAL ELEMENT INSPECTION METHOD, SYSTEM, AND APPLICATION**

(57)    The present disclosure provides an optical element inspection method, system and application. The method includes: collecting point cloud data of an optical element under inspection; performing fitting and reconstruction according to the point cloud data to obtain freeform surface data; performing simulation calculation on the freeform surface data to obtain a virtual image tested pattern; and performing quality inspection according to the virtual image tested pattern to obtain a quality inspection result of the optical element under inspection. By performing simulation calculation on the freeform surface of the optical element under inspection to obtain the virtual image tested pattern, obtaining the quality inspection result of the optical element under inspection through the virtual image tested pattern, and replacing optical elements and cameras actually used for inspection using the simulation technique, the inspection process can be simplified, the system deviation accumulated by a plurality of components can be reduced or even eliminated, the inspection accuracy and efficiency can be improved, thereby realizing the low-cost and high-precision optical element inspection.

101 Collecting point cloud data of an optical element under inspection

102 Performing fitting and reconstruction according to the point cloud data to obtain freeform surface data

103 Performing simulation calculation on the freeform surface data to obtain a virtual image tested pattern

104 Performing quality inspection according to the virtual image tested pattern to obtain a quality inspection result of the optical element under inspection

FIG. 1

EP 4 607 171 A1

**Description**

The present disclosure claims priority to Chinese Patent Application NO. 202211473751.6, entitled "optical element inspection method, system, and application" and filed on November 22, 2022, which is hereby incorporated in its entirety.

TECHNICAL FIELD

The present disclosure relates to the technical field of computers, and particularly to an optical element inspection method, system and application.

BACKGROUND

The vehicle is one of the most important means of transportation for human beings. With the application of a Head Up Display (HUD) of the vehicle, the time for a driver to look down at a dashboard or related information can be reduced, thereby improving the driving safety. In order to ensure the imaging quality of the HUD, it is necessary to inspect the optical components of the HUD. In the related art, the HUD test items are usually inspected and judged by simulating a real vehicle HUD system through imaging type, or the product quality is controlled by inspecting the geometric characteristics of the HUD glass in the HUD reflection area.

SUMMARY

In the related art, the way of inspecting and judging the HUD test items by simulating a real vehicle HUD system through imaging type requires a standard support system to be equipped with a specific camera system or the like, which has a complex structure, a high cost, a low universality and a low accuracy of inspection results. In addition, there is also a problem of inaccurate inspection results in the way of controlling the product quality by inspecting the geometric characteristics of the HUD glass in the HUD reflection area. For example, when glass surface type and fluctuation characteristics are inspected, because the direct correlation between the glass surface shape and fluctuation characteristics and the final imaging quality of the HUD is not strong, it is still impossible to accurately control the imaging quality of the HUD glass.

An objective of the present disclosure is to provide an optical element inspection method, which obtains a virtual image tested pattern by carrying out simulation calculation on a freeform surface of the optical element under inspection, and obtains the quality inspection result of the optical element under inspection through the virtual image tested pattern. So, the present disclosure can simplify the inspection process, improve the inspection accuracy and efficiency, and realize the low-cost and high-precision inspection of an optical element. Another objective of the present disclosure is to provide an optical element inspection system. Still another objective of the present disclosure is to provide a computer-readable medium. Yet another objective of the present disclosure is to provide a computer device.

In order to achieve the above objectives, in an aspect, the present disclosure discloses an optical element inspection method, including:

collecting point cloud data of an optical element under inspection;
performing fitting and reconstruction according to the point cloud data to obtain freeform surface data;
performing simulation calculation on the freeform surface data to obtain a virtual image tested pattern; and
performing quality inspection according to the virtual image tested pattern to obtain a quality inspection result of the optical element under inspection.

Exemplarily, the collecting point cloud data of the optical element under inspection includes:
scanning and measuring, by using a three-dimensional imaging technique, a surface of the optical element under inspection with a preset scanning area and data volume to obtain the point cloud data.

Exemplarily, the method further includes:

scanning and measuring the surface of the optical element under inspection and/or different areas of the surface of the optical element under inspection for multiple times with different angles to obtain a plurality of groups of point cloud data; and
performing data stitching on the plurality of groups of point cloud data to obtain stitched point cloud data.

Exemplarily, before the performing fitting and reconstruction according to the point cloud data to obtain freeform surface data, the method further includes:

preprocessing the point cloud data to obtain preprocessed point cloud data.

Exemplarily, the performing fitting and reconstruction according to the point cloud data to obtain freeform surface data includes:

performing fitting and reconstruction on a freeform surface following preset surface fitting parameters according to the point cloud data through preset design software, to obtain the freeform surface data.

Exemplarily, the surface fitting parameters include a tolerance value, a surface horizontal order and a surface vertical order.

Exemplarily, value range of the tolerance value is 1 time to 10 times of a scanning and measurement precision, exemplarily 2 times to 5 times.

Exemplarily, a value range of the surface horizontal order ranges is 3 orders to 8 orders, and

a value range of the surface vertical order ranges is 3 orders to 8 orders.

Exemplarily, data types of the freeform surface include a hyperbolic surface, a composite surface, an XY polynomial surface, a trapezoidal distortion correction surface, a Forbes surface, a Zernike polynomial surface, a Gaussian basis function composite surface, a non-uniform rational B-spline surface, a segmented annular surface, and a stitched aspheric surface.

Exemplarily, before the performing simulation calculation on the freeform surface data to obtain the virtual image tested pattern, the method further includes:

verifying the freeform surface data according to a preset verification strategy; and

if the verification is successful, continuing the step of performing simulation calculation on the freeform surface data to obtain the virtual image tested pattern.

Exemplarily, the freeform surface data includes a curvature radius value, and the verification strategy includes a set minimum curvature radius; and the verifying the freeform surface data according to the preset verification strategy includes:

determining that the verification is failed if the curvature radius value is less than the minimum curvature radius; and

determining that the verification is successful if the curvature radius value is greater than or equal to the minimum curvature radius.

Exemplarily, the freeform surface data includes a deviation value of each sample point in the point cloud data, and the verification strategy includes a ratio threshold;

the verifying the freeform data according to the preset verification strategy includes:

comparing the deviation value of each sample point with a tolerance value in surface fitting parameters, and counting the number of sample points with the deviation value greater than the tolerance value;

obtaining a deviation ratio according to the counted number of sample points and the total number of sample points;

determining that the verification is failed if the deviation ratio is greater than the ratio threshold; and

determining that the verification is successful if the deviation ratio is less than or equal to the ratio threshold.

Exemplarily, the performing simulation calculation on the freeform surface data to obtain the virtual image tested pattern includes:

performing simulation calculation on the freeform surface data according to preset simulation input data by preset simulation software, to obtain the virtual image tested pattern.

Exemplarily, the simulation input data comprises a position and a preset pattern of an image generation unit, a camera distribution position, a mirror group, a rotation mechanism and a rotation angle, a size and a position of a virtual image plane;

the performing simulation calculation on the freeform surface data according to preset simulation input data by preset simulation software, to obtain the virtual image tested pattern includes:

using a light point on the preset pattern of the image generation unit, according to the principle of light reflection and refraction, light of the light point is projected from the position of the image generation unit through the mirror group controlled by the rotation mechanism and the optical element under inspection, and finally to the camera distribution position;

obtaining a virtual image point position according to a virtual image imaging principle; and

obtaining the virtual image tested pattern on the virtual image plane according to a plurality of virtual image point positions.

Exemplarily, the performing quality inspection according to the virtual image inspection pattern to obtain the quality inspection result of the optical element under inspection includes:

performing calculation on the virtual image tested pattern through a preset evaluation function corresponding to each evaluation index, to obtain an evaluation parameter corresponding to each evaluation index; and
determining the quality inspection result according to the evaluation parameter corresponding to each evaluation index and a preset evaluation criterion corresponding to each evaluation index.

Exemplarily, the evaluation index includes at least one selected from a horizontal straightness, a vertical straightness, a horizontal ghosting, a vertical ghosting, an image rotation, a shift of gravity center, a graphic tilt, a trapezoid degree, a zoom ratio, an image brightness, an image color, a binocular horizontal parallax, a binocular vertical parallax, a virtual image plane dynamic distortion and an eye box plane dynamic distortion.

Exemplarily, the performing quality inspection according to the virtual image tested pattern to obtain the quality inspection result of the optical element under inspection includes:
comparing the virtual image tested pattern with a standard virtual image pattern to determine the quality inspection result.

The present disclosure further discloses an optical element inspection system, includes:

an acquisition unit configured to acquire point cloud data of an optical element under inspection;
a fitting and reconstruction unit configured to perform fitting and reconstruction according to the point cloud data to obtain freeform surface data;
a simulation unit configured to perform simulation calculation on the freeform surface data to obtain a virtual image tested pattern; and
a quality inspection unit configured to perform quality inspection according to the virtual image tested pattern to obtain a quality inspection result of the optical element under inspection.

Exemplarily, the acquisition unit is specifically configured to scan and measure, by using a three-dimensional imaging technique, a surface of the optical element under inspection with a preset scanning area and data volume to obtain the point cloud data.

Exemplarily, the acquisition unit is further configured to scan and measure the surface of the optical element under inspection and/or different areas of the surface of the optical element under inspection for multiple times with different angles to obtain a plurality of groups of point cloud data;
the system further includes:
a stitching unit configured to stitch the plurality of groups of point cloud data to obtain stitched point cloud data.

Exemplarily, the system further includes:
a preprocessing unit configured to preprocess the point cloud data to obtain preprocessed point cloud data.

Exemplarily, the fitting and reconstruction unit is specifically configured to perform fitting and reconstruction of a freeform surface following preset surface fitting parameters according to the point cloud data through preset design software, to obtain freeform surface data.

Exemplarily,
a verification unit configured to verify the freeform surface data according to a preset verification strategy; and if the verification is successful, trigger the simulation unit to continue simulation calculation on the freeform surface data to obtain the virtual image tested pattern.

Exemplarily, the simulation unit is specifically configured to perform simulation calculation on the freeform surface data according to preset simulation input data by preset simulation software, to obtain the virtual image tested pattern.

Exemplarily, the quality inspection unit is specifically configured to perform calculation on the virtual image tested pattern through a preset evaluation function corresponding to each evaluation index, to obtain an evaluation parameter corresponding to each evaluation index; and determine the quality inspection result according to the evaluation parameter corresponding to each evaluation index and a preset evaluation criterion corresponding to each evaluation index.

Exemplarily, the quality inspection unit is specifically configured to compare the virtual image tested pattern with a standard virtual image pattern to determine the quality inspection result.

The present disclosure further discloses an optical element inspection application, and a secondary image deviation of window glass, an optical distortion of window glass, a wedge angle or a head-up display image quality of window glass is inspected according to the aforementioned method.

The present disclosure further discloses a computer-readable medium, storing a computer program, and when executed by a processor, the program implements the aforementioned method.

The present disclosure further discloses a computer device, including a memory configured to store information including a program instruction, and a processor configured to control the execution of the program instruction, wherein when executing the program, the processor implements the aforementioned method.

The present disclosure further discloses a computer program product including a computer program/instruction, and when executed by a processor, the computer program/instruction implements the aforementioned method.

In the present disclosure, point cloud data of an optical element under inspection is collected; fitting and reconstruction are performed according to the point cloud data to obtain freeform surface data; simulation calculation is performed on the freeform surface data to obtain a virtual image tested pattern; quality inspection is performed according to the virtual image tested pattern to obtain a quality inspection result of the optical element under inspection. By performing simulation calculation on the freeform surface of the optical element under inspection to obtain the virtual image tested pattern, obtaining the quality inspection result of the optical element under inspection through the virtual image tested pattern, and replacing optical elements and cameras actually used for inspection using the simulation technique, the inspection process can be simplified, the system deviation accumulated by a plurality of components can be reduced or even eliminated, the inspection accuracy and efficiency can be improved, thereby realizing the low-cost and high-precision optical element inspection.

BRIEF DESCRIPTION OF THE DRAWINGS

In order to more clearly illustrate the technical solutions in the embodiments of the present disclosure or in the prior art, the drawings required in the description of the embodiments or the prior art will be briefly introduced below. Obviously, the drawings involved in the following description only illustrate some embodiments of the present disclosure, and those of ordinary skill in the art can obtain other drawings from these drawings without paying any inventive effort.

FIG. 1 illustrates a flowchart of an optical element inspection method according to an embodiment of the present disclosure;

FIG. 2 illustrates a flowchart of optical element inspection method according to another embodiment of the present disclosure;

FIG. 3 illustrates a schematic diagram of a horizontal linear regression line of a virtual image tested pattern according to an embodiment of the present disclosure;

FIG. 4 illustrates a structural diagram of an optical element inspection system according to an embodiment of the present disclosure; and

FIG. 5 illustrates a structural diagram of a computer device according to an embodiment of the present disclosure.

DESCRIPTION OF THE EMBODIMENTS

The technical solutions in the embodiments of the present disclosure will be clearly and completely described below with reference to the drawings for the embodiments of the present disclosure. Obviously, those described are only a part, rather than all, of the embodiments of the present disclosure. Based on the embodiments in the present disclosure, any other embodiment obtained by those of ordinary skill in the art without paying any inventive effort should fall within the protection scope of the present disclosure.

In order to facilitate the understanding of the technical solutions of the present disclosure, the related contents of the technical solutions of the present disclosure will be illustrated below. A Head Up Display (HUD) on a vehicle may project important information onto an area in front of a windshield, so that the driver can see the important information clearly without looking down, thereby reducing the time for a driver to look down at a dashboard or related information, facilitating human eyes to switch between far and near, concentrating the driver's attention during driving to the greatest extent, improving driving safety, and providing richer driving information.

HUD imaging is that instrument signals such as a vehicle speed, a navigation and other information are projected to an HUD projection area on an inner surface of the windshield through a Picture Generation Unit (PGU) in an HUD projector, and then enter the human eye after being reflected by the windshield, thereby forming a virtual image in front of the windshield, which is called as a primary image. Since the windshield is a laminated glass with a certain thickness, after entering the laminated glass, light is reflected again on an outer surface of the windshield and/or a highly reflective medium layer to enter the human eyes, thereby forming a second or more virtual images in front of the windshield, which are collectively called as secondary images. The windshield in an HUD imaging system may be understood as a piece of optical element.

The inspection process of an HUD image is to simulate the projection of a real vehicle. The PGU projects a preset pattern onto an area in front of the windshield, and takes, through the arrangement and combination of cameras or by means of freely positioned cameras, pictures of the HUD image (virtual image) observed at a specified camera position to obtain pictures to simulate the view of the human eyes of an observer. By processing the pictures, various test items are calculated, and checked to judge whether they meet the specified requirements.

Specifically, the quality of the HUD image is inspected by quantifying a distortion degree of the observed HUD image (virtual image) relative to a preset pattern. The distortion of the HUD image at least comes from a deviation of an optical element, and a system deviation will be accumulated in case of a plurality of components. The preset pattern may be actual information to be displayed, such as a vehicle speed, a navigation, or the like, and may also be a standard geometric pattern, such as a dot pattern, a line pattern, a mixed pattern of dots and lines, or the like.

Taking an optical element inspection system as an execution subject for example, the implementation process of the optical element inspection method according to an embodiment of the present disclosure is described below. It can be understood that the execution subject of the optical element inspection method according to the embodiment of the present disclosure includes but is not limited to an optical element inspection system.

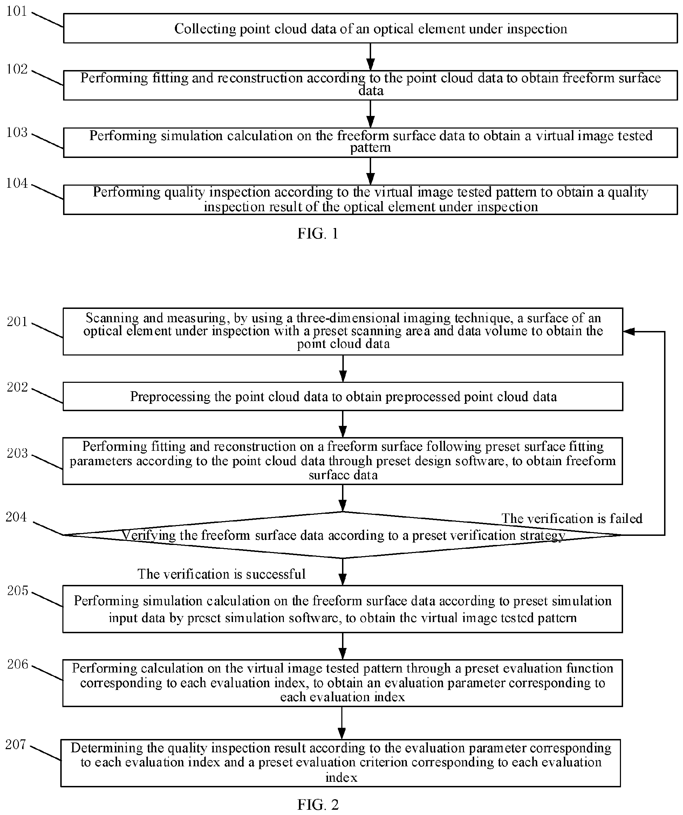

FIG. 1 illustrates a flowchart of an optical element inspection method according to an embodiment of the present disclosure. As illustrated in FIG. 1, the method includes:

Step 101: collecting point cloud data of an optical element under inspection.
Step 102: performing fitting and reconstruction according to the point cloud data to obtain freeform surface data.
Step 103: performing simulation calculation on the freeform surface data to obtain a virtual image tested pattern.
Step 104: performing quality inspection according to the virtual image tested pattern to obtain a quality inspection result of the optical element under inspection.

It should be noted that the acquisition, storage, use and processing of the data in the technical solutions of the present disclosure are in compliance with the relevant provisions of national laws and regulations. The user information in the embodiments of the present disclosure is obtained through legal and compliant channels, and the acquisition, storage, use and processing of the user information are authorized and agreed by the customers.

In the technical solutions according to the embodiments of the present disclosure, point cloud data of an optical element under inspection is collected; fitting and reconstruction are performed according to the point cloud data to obtain freeform surface data; simulation calculation is performed on the freeform surface data to obtain a virtual image tested pattern; quality inspection is performed according to the virtual image tested pattern to obtain a quality inspection result of the optical element under inspection. By performing simulation calculation on the freeform surface of the optical element under inspection to obtain the virtual image tested pattern, obtaining the quality inspection result of the optical element under inspection through the virtual image tested pattern, and replacing optical elements and cameras actually used for inspection using the simulation technique, the inspection process can be simplified, the system deviation accumulated by a plurality of components can be reduced or even eliminated, the inspection accuracy and efficiency can be improved, thereby realizing the low-cost and high-precision optical element inspection.

FIG. 2 illustrates a flowchart of optical element inspection method according to another embodiment of the present disclosure. As illustrated in FIG. 2, the method includes:

Step 201: scanning and measuring, by using a three-dimensional imaging technique, a surface of an optical element under inspection with a preset scanning area and data volume to obtain the point cloud data.

In some embodiments, each step is performed by an optical element inspection system.

In some embodiments, the optical element under inspection is an HUD optical element, including but not limited to HUD glass and a mirror group in an HUD optical path, and the mirror group includes a concave mirror, a folding mirror, etc. The HUD optical element is continuous and has a certain rigidity. HUD imaging is achieved by the reflection from a medium surface of the optical element, and a distortion state of a reflection surface is related to an HUD imaging quality.

In some embodiments, the optical element inspection system has a scanning function, which can scan the surface of the optical element under inspection according to the preset scanning area and data volume to obtain information data such as the shape, color and texture of the optical element under inspection. In this embodiment, the scanning area and the data volume are preset according to actual needs, and are not limited in the embodiments of the present disclosure. As an alternative, the scanning area is in a range of 200 mm×250 mm or 400 mm× 600 mm. In the scanning area, a point spacing between two adjacent points may be 20 mm, 10 mm, 1 mm, 0.5 mm or 0.1 mm. As the point spacing for scanning decreases, the surface type representation of the scanning area becomes finer, and the data volume gets larger, which will increase the amount of the subsequent calculation. The point spacing for scanning is determined by the data volume and the density of the standard tested pattern. As an alternative, a distance L between the intersections of two light rays corresponding to two adjacent points on a tested pattern lattice and a reflective surface of the HUD optical element can be seen at a certain point in an eye box, and the point spacing may be 0.1 times to 0.5 times of the distance L. For example, L=25 mm on the HUD glass, and the point spacing for scanning the point cloud data may be set between 2.5 mm and 12.5 mm. It should be noted that the point spacing may be set according to the data volume and actual needs, and is not limited in the embodiments of the present disclosure.

In some embodiments, the three-dimensional imaging technique is to reconstruct a three-dimensional digital model of an object under inspection by analyzing the information data such as the shape, color and texture of the optical element under inspection. The three-dimensional imaging technique includes a contact measurement technique, a passive non-contact measurement technique and an active non-contact measurement technique. In this embodiment, the contact measurement technique obtains three-dimensional data by contacting the surface of the optical element under inspection with a probe, such as a Coordinate Measuring Machine (CMM). The passive non-contact measurement technique is to directly inspect the environmental energy reflected by the surface of the optical element under inspection, such as a binocular vision technique. And the active non-contact measurement technique is to actively apply extra energy to a surface of an object under inspection and captures the reflected energy to measure the surface of the object; and the measurement principles are: a time-of-flight method, a triangulation method, a structured light method, a moire topography and a modulation degree measurement method, and the structured light method includes a Fringe Projection Profilometry (FPP), a Phase Measuring Profilometry (PMP), a Phase Measuring Deflectometry technique (PMD) or a Fringe Reflection Technique (FRT).

Taking the PMP as an example, the HUD glass is scanned according to a preset scanning area and data volume to obtain surface type data within an HUD area, thereby realizing multi-point continuous 3D topography scanning, and generating surface point cloud (Cloudpoint) data of a certain scanning area. The point cloud data includes three-dimensional space coordinates (XYZ) information of each point, so that the point cloud data can be quickly obtained. The typical measurement time can be 2 seconds to 30 seconds, and the measurement precision can reach a submicron ($\mu$m) level or higher. Such a high-precision scanning measurement is helpful to improve the accuracy of subsequent glass profile fitting.

In some embodiments, the format of the point cloud data includes, but is not limited to .pts, .asc, .dat, .stl, .iges, .xyz and .txt, and the specific format may be set according to actual needs, which is not limited in the embodiments of the present disclosure.

It should be noted that the HUD glass includes an inner surface and an outer surface, and even a reflective layer, so different surfaces of the HUD glass can be inspected according to actual needs. For example, if only the image quality of a primary image of the HUD glass needs to be inspected, it is only necessary to scan and measure the inner surface of the HUD glass; if the ghost on the outer surface of the HUD glass also needs to be inspected, it is necessary to scan and measure the outer surface of the HUD glass and the inner surface of the HUD glass; and if the ghost on the reflective layer of the HUD glass also needs to be inspected, it is necessary to scan and measure the corresponding reflective layer or indirectly obtained the corresponding reflective layer of the HUD glass. The scanning and measuring process is the same as the above process, and will not be described here.

Further, if the size of the optical element under inspection is too large or a micro-motion such as a movement occurs during scanning and measurement, the point cloud data obtained by one scan will have the problems of incomplete data, data defects or accumulated errors. In order to ensure the integrity and accuracy of the data, the surface of the optical element under inspection and/or different areas of the surface of the optical element under inspection are scanned and measured for multiple times from different angles to obtain a plurality of groups of point cloud data; and data stitching is performed on the plurality of groups of point cloud data to obtain stitched point cloud data.

It should be noted that if a plurality of groups of data is obtained, an average value or a median value of deviations of position coordinates of the points corresponding to each group of data relative to the theoretical positions may be taken to eliminate the outliers in the point cloud data, thereby obtaining the final point cloud data.

It should be noted that the data stitching is a prior art and will not be described here.

Step 202: preprocessing the point cloud data to obtain preprocessed point cloud data.

In some embodiments, the preprocessing includes, but is not limited to, at least one selected from deleting the point cloud data in a redundant area, reducing a point cloud density, and eliminating defective points in the point cloud data.

In some embodiments, preprocessing the point cloud data can improve the accuracy of subsequent fitting and simulation and increase the calculation efficiency.

Step 203: performing fitting and reconstruction on a freeform surface following preset surface fitting parameters according to the point cloud data through preset design software, to obtain freeform surface data.

In some embodiments, the design software is DASSAULT SYSTEM CATIA.

In some embodiments, the values of the surface fitting parameters are preset according to the actual situation, and the presented values of the surface fitting parameters are closely related to the real degree of the freeform surface to restore the actual optical element. The surface fitting parameters include, but are not limited to, a tolerance value, a surface horizontal (U) order and a surface vertical (V) order.

In this embodiment, the tolerance value is a deviation between the point cloud data and the created freeform surface. The deviation of the freeform surface decreases as the tolerance value decreases, but if the tolerance value is set too small, the freeform surface tends to wrinkle locally. The tolerance value decreases as a scanning and measurement precision increases, and from the perspective of the actual effect, a value range of the tolerance value is 1 time to 10 times of a scanning and measurement precision, exemplarily 2 times to 5 times. For example, if the scanning and measurement precision is 0.001 mm, the tolerance value is set to 0.002 mm to 0.005 mm, and the freeform surface created at this time has a better effect.

As the order of the surface in one direction increases, the number of the control nodes in that direction increases. If the order is too large, the freeform surface tends to be wrinkled locally, and the calculation amount for the generation of the freeform surface is also large. As an alternative, a value range of the surface horizontal order is 3 orders to 8 orders, and a value range of the surface vertical order is 3 orders to 8 orders. It should be noted that the surface horizontal order may be the same as or different from the surface vertical order.

In some embodiments, the data types of the freeform surface include a hyperbolic surface, a composite surface, an XY polynomial surface, a trapezoidal distortion correction surface, a Forbes surface, a Zernike polynomial surface, a Gaussian basis function composite surface, a Non-Uniform Rational B-Spline (NURBS) surface, a segmented annular surface, and a stitched aspheric surface.

The HUD optical element is designed as a freeform surface in a design state, and after being manufactured, is reconstructed into a new freeform surface (also called a simulation surface) by obtaining three-dimensional surfaces of a product. A surface state of the product can be better reflected as the simulation surface is more accurate. Specifically, taking DASSAULT SYSTEM CATIA software as the design software for example, the output format of the point cloud data is stl, and the point cloud data is imported into DASSAULT SYSTEM CATIA software to confirm that the point cloud data can cover the effective area of the HUD; the values of various surface fitting parameters are set, so as to create a face of the HUD glass, thereby obtaining a suitable continuous freeform surface, in which the freeform surface data at least includes a curvature radius value.

Step 204: verifying the freeform surface data according to a preset verification strategy; if the verification is successful, performing step 205, and if the verification is failed, performing step 201.

In some embodiments, the freeform surface data at least includes a curvature radius value, and the verification strategy includes a set minimum curvature radius. The verification strategy may be set according to actual needs, which is not limited in the embodiments of the present disclosure.

Step 204 specifically includes:
Step 2041: judging whether the curvature radius value is greater than or equal to the minimum curvature radius; if so, performing step 2042; and if not, performing step 2043.

In some embodiments, since the curvature radius of the HUD glass in the HUD area is generally: $Ry \geq 2000mm$ and $Rz \geq 5000mm$, where Ry is a horizontal curvature radius and Rz is a vertical curvature radius, in order to quickly check the rationality of the freeform surface, a minimum curvature radius R is set (for example, R=1000 mm) according to the actual production process and the statistics of data samples.

Specifically, if the curvature radius value is greater than or equal to the minimum curvature radius value (i.e., either of the horizontal curvature radius value and the vertical curvature radius value is greater than or equal to the minimum curvature radius), it means that the curvature radius of the freeform surface is rational, and step 2042 will be performed; if the curvature radius value is less than the minimum curvature radius (i.e., the horizontal curvature radius value or the vertical curvature radius value is less than the minimum curvature radius), it means that the curvature radius of the freeform surface is irrational, and step 2043 will be performed.

Step 2042: determining that the verification is successful.

In some embodiments, if the curvature radius of the freeform surface is rational, the verification is successful, and step 205 will be performed.

Step 2043: determining that the verification is failed.

In some embodiments, if the curvature radius of the freeform surface is irrational, the verification is failed, and it is necessary to scan and measure the point cloud data again, and step 201 will be performed.

Further, step 2043 is performed for 5 times or less, such as 2 times, 3 times, 4 times or 5 times. If the verification is still determined as being failed when step 2043 is performed for more than 5 times, it is necessary to determine the reasons of the verification abnormality, for example, whether the deviation of the point cloud data is too large, whether the surface type deviation of the HUD glass is too large, or the like.

Further, the freeform surface data also includes the deviation value of each sample point in the point cloud data, and the verification strategy also includes a ratio threshold. Step 204 further specifically includes:
Step 3041: acquiring and comparing the deviation value of each sample point in the point cloud data with a tolerance value in surface fitting parameters, and counting the number of sample points with the deviation value greater than the tolerance value.

In some embodiments, the deviation value is a deviation value between the data of each sample point and the theoretical design data, and the deviation values of a few sample points in the point cloud data are greater than the tolerance value which is set in the surface fitting parameters. When the number of such sample points is large, it means that the deviation of the point cloud data is large and the accuracy of the quality of the scanned data is poor.

Specifically, the sample points with the deviation value greater than the tolerance value are screened out, and the number of the screened sample points is counted.

Step 3042: obtaining a deviation ratio according to the counted number of sample points and the total number of sample points.

Specifically, the deviation ratio is obtained by dividing the number of counted sample points by the total number of sample points.

Step 3043: judging whether the deviation ratio is less than or equal to a ratio threshold; if so, performing step 3044; and if not, performing step 3045.

In some embodiments, in order to verify the quality of the scanned data, a ratio threshold is set according to actual needs, thereby verifying the quality of the scanned data.

Specifically, if the deviation ratio is less than or equal to the ratio threshold, it means that the data deviation is small and there is no quality problem in the scanned data, then step 3044 will be performed; if the deviation ratio is greater than the ratio threshold, the surface data has a large deviation, and there is a quality problem in the scanned data, then step 3045 will be performed.

Step 3044: determining that the verification is successful.

In some embodiments, if the data deviation is small, the scanned data has no quality problem, and the verification is successful.

Step 3045: determining that the verification is failed.

In some embodiments, if the data deviation is large, the scanned data has a quality problem, the verification is failed.

Step 205: performing simulation calculation on the freeform surface data according to preset simulation input data by preset simulation software, to obtain the virtual image tested pattern.

In some embodiments, the simulation input data is a standardized optical path model, including but not limited to a position and a preset pattern of an image generation unit, a camera distribution position, a mirror group, a rotation mechanism and a rotation angle, and a size and a position of a virtual image plane; and the freeform surface data at least includes a curvature radius value. In this embodiment, the image generation unit is configured to generate a preset patterns and project the preset pattern onto the HUD glass through the mirror group, and the image generation unit for example may be configured as a Thin Film Transistor Liquid Crystal Display (TFT-LCD) technique, a Digital Light Processing (DLP) technique, a laser scanning technique or the like. The rotation mechanism is configured to adjust the rotation angle of the mirror group.

In some embodiments, the simulation software is DASSAULT SYSTEM CATIA or ANSYS SPEOS. In this embodiment, DASSAULT SYSTEM CATIA has both a design function and a simulation function, so as to be used as design software and further as simulation software.

In some embodiments, after the simulation input data is set, the freeform surface data is input into the simulation software to perform simulation calculation under a given program, to output the virtual image tested pattern, the virtual image tested pattern includes a plurality of virtual image points and a virtual image point position corresponding to each virtual image point. The virtual image tested pattern is obtained by the simulation technique, instead of the traditional obtainment by optical elements and cameras, thereby simplifying the inspection process and reducing or even eliminating the system deviation accumulated by a plurality of components. In this embodiment, the virtual image tested pattern may be the information to be displayed actually, the information to be displayed actually includes vehicle information and external information, such as a vehicle speed, a rotation speed, a driving range, a gear position, a turn signal, an interior temperature, a seat belt reminder, an engine state, a door state, a parking state, a tire pressure, an airbag state, a navigation, a driving mode, a seat state, a chassis state, a speed limit sign and other words and/or patterns. The information to be displayed actually may also be a standard geometric pattern, such as a dot diagram, a line diagram, a mixed diagram of dot matrix and lines, etc.

The algorithm of simulation calculation includes a direct coordinate acquisition method and an indirect coordinate acquisition method.

The direct coordinate acquisition method: DASSAULT SYSTEM CATIA software is taken as simulation software for example, and a HUD glass is taken as an optical element under inspection for example. Specifically, light point on the preset pattern of the image generation unit are used, according to the principle of light reflection and refraction, light of the light point is projected from the position of the image generation unit to the optical element under inspection (including the refraction and reflection of the light within the optical element under inspection at a plurality of high-reflective layers) through the mirror group controlled by the rotation mechanism, and finally to reflect to the camera distribution position; according to a virtual image imaging principle, a virtual image point position (XYZ) in a three-dimensional space is obtained according to the freeform surface data and an intersection between a virtual image plane and a reverse extension line of light of the light point reflected to the camera distribution position by the optical element under inspection; and the virtual image tested pattern on a virtual image plane is obtained according to a plurality of virtual image point positions. In the same way, it is possible to calculate the virtual image point position of each light point at each camera position after the reflection by different reflective surfaces.

As another alternative, according to the principle of light reversibility, the camera is set to emit light to each light point on the image generation unit, so as to obtain the virtual image point position of each light point at each camera position after the reflection by different reflective surfaces.

The indirect coordinate acquisition method: ANSYS SPEOS software is taken as optical software for example, and a HUD glass is taken as an optical element under inspection for example. Specifically, each light point on each preset pattern of the image generation unit is set as a light source with a small specifications, such as a circle with a diameter of 0.1 mm, and input parameters required for simulation are set according to the imaging principle, including but not limited to light source properties, material properties, inspectors and algorithms, so as to perform high-precision simulation, then the virtual image tested pattern on the virtual image plane can be obtained, and the two-dimensional coordinates (XY) of the corresponding spot center point on the pattern plane are identified and extracted. In a similar way, the light point may be set to have a small enough specification, such as a circle with a diameter of 0.01 mm or less; a bundle of light rays can be obtained by ray tracing in ANSYS SPEOS software, and any light ray may be taken therefrom to intersect the virtual image plane, to obtain a position coordinate (XYZ) in a three-dimensional space. In the same way, it is possible to calculate the virtual image point position of each light point at each camera position after the reflection by different reflective surfaces.

It should be noted that in the HUD geometric imaging mode, the light rays satisfy the rules of refraction and reflection, and the above simulation calculation may be understood as an accurate calculation of the virtual image point position.

Further, the distortion of the virtual image viewed at different eye points of the eye box does not completely come from the deviation of the optical element itself. Since the HUD optical path system is off-axis asymmetric, a distortion is caused to some extent. In order to consider the deviation of a given optical element alone, it is necessary to correct the distortion from the optical element system itself. Therefore, after the direct coordinates of the virtual image tested pattern are obtained, it is necessary to add a correction amount.

The basic rule of the correction amount is as follows: usually, during the design of the HUD, the eye box is composed of a high eye box, a middle eye box and a low eye box, and a theoretical virtual image viewed from a center point (camera_0) of the middle eye box is a standard virtual image pattern under the rule by default, and the coordinates of a point S on the preset pattern of the image generation unit corresponding to the standard virtual image pattern are those of point $P_0$ ($Y_0$, $Z_0$); and viewed from a point Camera n, the coordinates of the point S corresponding to the standard virtual image pattern are those of point $P_n$ ($Y_n$, $Z_n$), then correction values ($\Delta Y$, $\Delta Z$)=($Y_n$-$Y_0$, $Z_n$- $Z_0$). In this embodiment, ($Y_0$, $Z_0$) and ($Y_n$, $Z_n$) are the coordinates of point S on the preset pattern of the image generation unit corresponding to the standard virtual image pattern when viewed from different camera positions, and the coordinates of point S on the preset pattern corresponding to the virtual image inspection pattern when viewed from the point Camera_n are those of point $P_m$ ($Y_m$, $Z_m$), then the corrected coordinates of the point Pm are ($Y_m$-$\Delta Y$, $Z_m$-$\Delta Y$). Therefore, the coordinate deviation after the compensation for the correction amount is caused by the deviation of the optical element, and the deviation of the coordinate value corresponds to the HUD imaging quality.

Further, the quality inspection result of the optical element is determined by comparing the virtual image tested pattern with the standard virtual image pattern.

Step 206: performing calculation on the virtual image tested pattern through a preset evaluation function corresponding to each evaluation index, to obtain an evaluation parameter corresponding to each evaluation index.

In some embodiments, the evaluation index includes, but is not limited to, at least one selected from a horizontal straightness, a vertical straightness, a horizontal ghosting, a vertical ghosting, an image rotation, a gravity center deviation, a graphic tilt, a trapezoid degree, a zoom ratio, an image brightness, an image color, a binocular horizontal parallax, a binocular vertical parallax, a virtual image plane dynamic distortion and an eye box plane dynamic distortion. Different evaluation indexes are corresponding to different evaluation functions, which are preset according to the actual needs and used to quantitatively calculate the quality of a virtual image pattern. In this embodiment, the graphic brightness and the image color also require simulating the spectral data of the image generation unit and the material properties of the image generation unit in the input data.

Taking the evaluation index as the horizontal straightness for example, step 206 specifically includes:
Step 2061: performing horizontal straightness calculation on each row of the virtual image tested pattern through the evaluation function corresponding to the horizontal straightness, to obtain the horizontal straightness of each row.

Specifically, all virtual image points of each row of the virtual image tested pattern are calculated through formula (1) to obtain the horizontal straightness of each row.

$$y = kx + b$$

$$D = \frac{1}{\sqrt{k^2 + 1}}(y - (kx + b))$$

$$S = \frac{\left|D_{peak}\right| + \left|D_{bottom}\right|}{L_{width}} \tag{1}$$

where, x denotes an abscissa of a virtual image point position of any virtual image point, y denotes an ordinate of the virtual image point position of any virtual image point, k denotes a slope of a linear regression line, b denotes an axial intercept of the linear regression line, D denotes a distance from any virtual image point to the linear regression line, $D_{peak}$ denotes a maximum value of deviation from the linear regression line among all virtual image points in any row, $D_{bottom}$ denotes a minimum value of deviation from the linear regression line among all virtual image points in any row, $L_{width}$ denotes an image horizontal width, and S denotes a horizontal straightness of any row.

In some embodiments, as the horizontal straightness decreases, the deviation of each virtual image point in any row of the virtual image tested pattern from a linear regression line of the row decreases, which means that a line represented by several points is straighter, i.e., the distortion of the virtual image tested pattern in the row decreases.

Step 2062: comparing the horizontal straightness of each row with each other and selecting a maximum horizontal straightness.

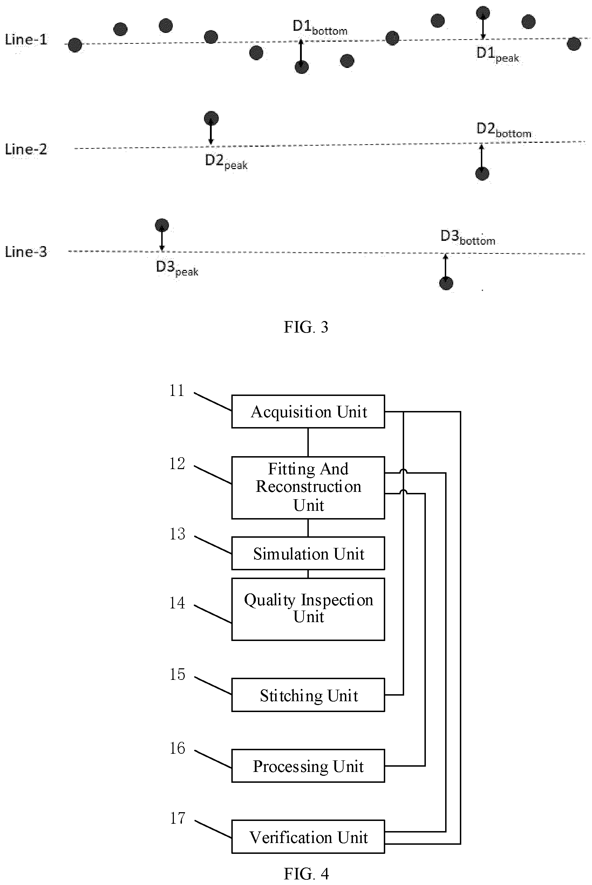

FIG. 3 illustrates a schematic diagram of a horizontal linear regression line of a virtual image inspection pattern according to an embodiment of the present disclosure. As illustrated in FIG. 3, three rows are extracted from the virtual image tested pattern to calculate the horizontal straightness, and all virtual image points in each row are corresponding to one linear regression line, respectively, i.e., Line-1, Line-2 and Line-3. Taking all virtual image points in a first row as an example, Line-1 shows that the virtual image points in the row are distributed above and below the linear regression line, where $D1_{bottom}$ denotes a minimum value of deviation from the linear regression line among all virtual image points in the row, and $D1_{peak}$ denotes a maximum value of deviation from the linear regression line among all virtual image points in the row; Line-2 only shows a minimum value $D2_{bottom}$ and a maximum value $D2_{peak}$ of deviations from the linear regression line among all virtual image points in a second row; Line-3 only shows a minimum value $D3_{bottom}$ and a maximum value $D3_{peak}$ of deviation from the linear regression line among all virtual image points in a third row.

After being calculated according to formula (1), the horizontal straightness S1, S2 and S3 of the three rows are compared to select the maximum one as the maximum horizontal straightness Smax=MAX (S1, S2, S3).

Step 2063: determining the maximum horizontal straightness as the evaluation parameter corresponding to the horizontal straightness of the virtual image tested pattern.

In some embodiments, as the horizontal straightness increases, the line is more curved, and the image distortion increases. The maximum horizontal straightness is corresponding to the most curved line in the virtual image tested pattern, i.e., a line with a largest image distortion. The accuracy of the image evaluation can be ensured by using the line with the largest image distortion to evaluate the image straightness.

It should be noted that according to the above calculation mode, the vertical straightness of each column in the virtual image tested pattern can also be calculated, and then the image can be evaluated according to the vertical straightness.

Step 207: determining the quality inspection result according to the evaluation parameter corresponding to each evaluation index and a preset evaluation criterion corresponding to each evaluation index.

In some embodiments, the evaluation parameter is correspondingly set according to the evaluation index; the evaluation criterion is set according to the actual need corresponding to the evaluation index.

Taking the evaluation index as the horizontal straightness for example, the evaluation parameter includes a maximum horizontal straightness and the evaluation criterion includes a horizontal straightness threshold. Specifically, if the maximum horizontal straightness is less than the threshold of horizontal straightness, it means that the row of points with the largest image distortion meets the evaluation criterion of the set horizontal straightness, and a quality inspection result indicating that the optical element is qualified is determined. If the maximum horizontal straightness is greater than or equal to the horizontal straightness threshold, it means that the row of points with the largest image distortion does not meet the evaluation criterion of the set horizontal straightness, and a quality inspection result indicating that the optical element is unqualified is determined.

Further, according to actual needs, the evaluation criterion may be divided into a plurality of grades and an evaluation parameter range corresponding to each grade, so as to determine a quality grade of the optical element according to the evaluation parameters.

Further, a quality evaluation report of the optical element is generated according to the quality inspection results, and sent to a user terminal. The quality evaluation report includes but is not limited to the information of the optical element, the evaluation criteria, the evaluation indexes, the evaluation parameters and the quality inspection results.

In order to further determine the inspection accuracy of the optical element inspection system in the embodiment of the present disclosure, the simulation result of an optical element under inspection may be output and checked offline.

Specifically, after the simulation of an optical element under inspection is completed, the light ray data subjected to simulation calculation is output, at least including collected 3D surface type point cloud data, fitted freeform surface data, light point data on a PGU lattice (row of points), given camera position coordinates, at least one set of corresponding light data and other optical element data participating in the simulation. The above data is transferred into 3D software to check whether the light data satisfies the rules of light reflection and refraction; if so, it means that the inspection result of the optical element inspection system in the embodiment of the present disclosure is accurate; and if not, it means that the inspection result of the optical element inspection system in the embodiment of the present disclosure is inaccurate. In this embodiment, the set of light ray data includes a light point and light ray transmitted to the camera position and reversely extended to the virtual image plane.

In an example in which one optical element under inspection is applied in the technical solution of the optical element inspection method according to the embodiment of the present disclosure, the virtual image tested pattern is captured by a camera at a certain position, i.e., a virtual image tested pattern subjected to simulation calculation is viewed at a certain eye position, and 21 points on a top edge of the virtual image tested pattern are taken to calculate the deviation of each point when being located on the virtual image tested pattern corresponding to the fitted profile and on the standard virtual image pattern corresponding to the theoretical design profile, where $\Delta Y$ denotes a deviation along a Y-axis direction, and $\Delta Z$ denotes a deviation along a Z-axis direction, which may be used for the evaluation of the image quality, and the calculated data table is shown in Table 1.

Table 1

| Camera No. | Virtual image point No. of the virtual image tested pattern | Deviation $\Delta Y$ of virtual image point of virtual image tested pattern in Y-axis direction | Deviation $\Delta Z$ of virtual image point of virtual image tested pattern in Y axis direction |
|---|---|---|---|
| 1 | R1_C1 | -0.76 mm | 1.04 mm |
| 1 | R1_C2 | -0.66 mm | 1.01 mm |
| 1 | R1_C3 | -0.57 mm | 0.98 mm |
| 1 | R1_C4 | -0.49 mm | 0.94 mm |
| 1 | R1_C5 | -0.41 mm | 0.90 mm |
| 1 | R1_C6 | -0.34 mm | 0.85 mm |
| 1 | R1_C7 | -0.29 mm | 0.81 mm |
| 1 | R1_C8 | -0.26 mm | 0.77 mm |
| 1 | R1_C9 | -0.26 mm | 0.73 mm |
| 1 | R1_C10 | -0.29 mm | 0.70 mm |
| 1 | R1_C11 | -0.33 mm | 0.68 mm |
| 1 | R1_C12 | -0.38 mm | 0.66 mm |
| 1 | R1_C13 | -0.44 mm | 0.67 mm |
| 1 | R1_C14 | -0.50 mm | 0.68 mm |
| 1 | R1_C15 | -0.57 mm | 0.71 mm |
| 1 | R1_C16 | -0.64 mm | 0.75 mm |
| 1 | R1_C17 | -0.71 mm | 0.81 mm |
| 1 | R1_C18 | -0.77 mm | 0.87 mm |
| 1 | R1_C19 | -0.83 mm | 0.93 mm |
| 1 | R1_C20 | -0.88 mm | 1.00 mm |
| 1 | R1_C21 | -0.92 mm | 1.06 mm |

It should be noted that the secondary image deviation of the window glass, the optical distortion of the window glass, the wedge angle of the window glass or image quality of the HUD of the window glass may be inspected according to the optical element inspection method of the present disclosure, to realize the application of the optical element inspection.

In the technical solution of the optical element inspection method according to the embodiment of the present disclosure, point cloud data of an optical element under inspection is collected; fitting and reconstruction are performed according to the point cloud data to obtain freeform surface data; simulation calculation is performed on the freeform surface data to obtain a virtual image tested pattern; quality inspection is performed according to the virtual image tested pattern to obtain a quality inspection result of the optical element under inspection. By performing simulation calculation on the freeform surface of the optical element under inspection to obtain the virtual image tested pattern, obtaining the quality inspection result of the optical element under inspection through the virtual image tested pattern, and replacing optical elements and cameras actually used for inspection using the simulation technique, the inspection process can be simplified, the system deviation accumulated by a plurality of components can be reduced or even eliminated, the inspection accuracy and efficiency can be improved, thereby realizing the low-cost and high-precision optical element inspection.

FIG. 4 illustrates a structural diagram of an optical element inspection system according to an embodiment of the present disclosure, and the system is configured to perform the optical element inspection method. As illustrated in FIG. 4, the system includes an acquisition unit 11, a fitting and reconstruction unit 12, a simulation unit 13 and a quality inspection unit 14.

The acquisition unit 11 is configured to acquire point cloud data of an optical element under inspection.

The fitting and reconstruction unit 12 is configured to perform fitting and reconstruction according to the point cloud data to obtain freeform surface data.

The simulation unit 13 is configured to perform simulation calculation on the freeform surface data to obtain a virtual image tested pattern.

The quality inspection unit 14 is configured to perform quality inspection according to the virtual image tested pattern to obtain a quality inspection result of the optical element under inspection.

In some embodiments, the acquisition unit 11 is specifically configured to scan and measure, by using a three-dimensional imaging technique, a surface of the optical element under inspection with a preset scanning area and data volume to obtain the point cloud data.

In some embodiments, the system further includes a stitching unit 15.

The acquisition unit 11 is further configured to scan and measure the surface of the optical element under inspection and/or different areas of the surface of the optical element under inspection for multiple times with different angles to obtain a plurality of groups of point cloud data.

The stitching unit 15 is configured to stitch the plurality of groups of point cloud data to obtain stitched point cloud data.

In some embodiments, the system further includes a preprocessing unit 16.

The preprocessing unit 16 is configured to preprocess the point cloud data to obtain preprocessed point cloud data.

In some embodiments, the fitting and reconstruction unit 12 is specifically configured to perform fitting and reconstruction on a freeform surface following preset surface fitting parameters according to the point cloud data through preset design software, to obtain freeform surface data.

In some embodiments, the apparatus further includes a verification unit 17.

The verification unit 17 is configured to verify the freeform surface data according to a preset verification strategy; and if the verification is successful, trigger the simulation unit 13 to continue simulation calculation on the freeform surface data to obtain the virtual image tested pattern.

In some embodiments, the freeform surface data includes a curvature radius value, and the verification strategy includes a set minimum curvature radius. The verification unit 17 is specifically configured to determine that the verification is failed if the curvature radius value is less than the minimum curvature radius; and determine that the verification is successful if the curvature radius value is greater than or equal to the minimum curvature radius.

In some embodiments, the freeform surface data includes the deviation value of each sample point in the point cloud data, and the verification strategy includes a ratio threshold. The verification unit 17 is specifically configured to compare the deviation value of each sample point with a tolerance value in surface fitting parameters, and count the number of sample points with the deviation value greater than the tolerance value; obtain a deviation ratio according to the counted number of sample points and the total number of sample points; determine that the verification is failed if the deviation ratio is greater than the ratio threshold; and determine that the verification is successful if the deviation ratio is less than or equal to the ratio threshold.

In some embodiments, the simulation unit 13 is specifically configured to perform simulation calculation on the freeform surface data according to preset simulation input data by preset simulation software, to obtain a virtual image tested pattern.

In some embodiments, the simulation input data includes a position and a preset pattern of the image generation unit, a camera distribution position, a mirror group, a rotation mechanism and a rotation angle, a size and a position of a virtual image plane. The simulation unit 13 is specifically configured to use a light point on the preset pattern of the image generation unit, according to the principle of light reflection and refraction, light of the light point is projected from the position of the image generation unit through the mirror group controlled by the rotation mechanism and the optical element under inspection, and finally to the camera distribution position; obtain a virtual image point position according to a virtual image imaging principle; and obtain the virtual image tested pattern on the virtual image plane according to of a plurality of virtual image point positions.

In some embodiments, the quality inspection unit 14 is specifically configured to perform calculation on the virtual image tested pattern through a preset evaluation function corresponding to each evaluation index, to obtain an evaluation parameter corresponding to each evaluation index; and determine the quality inspection result according to the evaluation parameter corresponding to each evaluation index and a preset evaluation criterion corresponding to each evaluation index.

In some embodiments, the quality inspection unit 14 is specifically configured to compare the virtual image tested pattern with a standard virtual image pattern to determine the quality inspection result.

In the technical solution of the embodiment of the present disclosure, point cloud data of an optical element under inspection is collected; fitting and reconstruction are performed according to the point cloud data to obtain freeform surface data; simulation calculation is performed on the freeform surface data to obtain a virtual image tested pattern; quality inspection is performed according to the virtual image tested pattern to obtain a quality inspection result of the optical element under inspection. By performing simulation calculation on the freeform surface of the optical element under inspection to obtain the virtual image tested pattern, obtaining the quality inspection result of the optical element under inspection through the virtual image tested pattern, and replacing optical elements and cameras actually used for inspection using the simulation technique, the inspection process can be simplified, the system deviation accumulated by a plurality of components can be reduced or even eliminated, the inspection accuracy and efficiency can be improved, thereby realizing the low-cost and high-precision optical element inspection.

The system, apparatus, modules or units set forth in the above embodiments may be specifically implemented by computer chips or entities, or by products with certain functions. A typical implementation device is a computer device. Specifically, the computer device may be, for example, a personal computer, a laptop computer, a cellular phone, a camera phone, an intelligent phone, a personal digital assistant, a media player, a navigation device, an email device, a game console, a tablet computer, a wearable device or any combination thereof.

An embodiment of the present disclosure provides a computer device, which includes a memory and a processor, in which the memory is configured to store information including program instructions, and the processor is configured to control the execution of the program instructions; when loaded and executed by the processor, the program instructions implement the steps of the embodiment of the optical element inspection method; for the detailed description, please refer to the embodiment of the optical element inspection method.

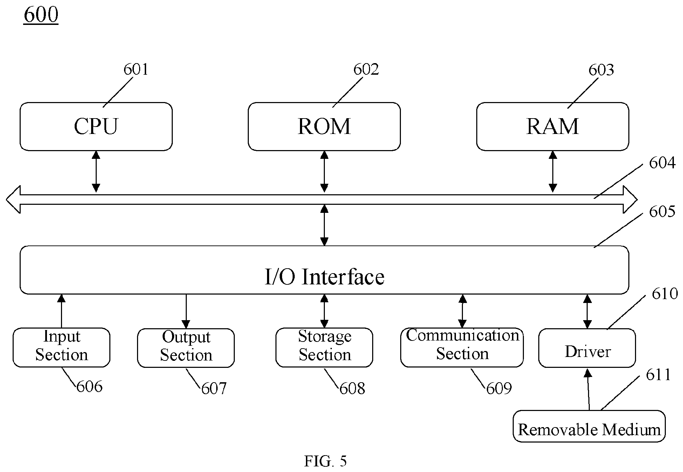

Reference is now made to FIG. 5, which illustrates a structural diagram of a computer device 600 suitable for implementing the embodiments of the present disclosure.

As illustrated in FIG. 5, the computer device 600 includes a Central Processing Unit (CPU) 601, which can perform various appropriate works and processing according to a program stored in a read-only memory (ROM) 602 or a program loaded into a Random Access Memory (RAM) 603 from a storage section 608. In the RAM 603, various programs and data required for the operation of the computer device 600 are also stored. The CPU 601, the ROM 602, and the RAM 603 are connected to each other through a bus 604. An Input/Output (I/O) interface 605 is further connected to the bus 604.

The following components are connected to the I/O interface 605: an input section 606 including a keyboard, a mouse, etc.; an output section 607 including a Cathode Ray Tube (CRT), a Liquid Crystal Display (LCD), a speaker, etc.; a storage section 608 including a hard disk, etc.; and a communication section 609 including a network interface card such as a LAN card, a modem, etc. The communication section 609 performs communication processing via a network such as the Internet. A driver 610 is further connected to the I/O interface 605 as needed. A removable medium 611, such as a magnetic disk, an optical disk, a magneto-optical disk, a semiconductor memory, or the like is installed on the drive 610 as needed, so that a computer program read therefrom can be installed in the storage section 608 as needed.

Particularly, according to the embodiments of the present disclosure, the procedure described above with reference to the flowchart may be implemented as a computer software program. For example, an embodiment of the present disclosure includes a computer program product including a computer program tangibly embodied on a machine-readable medium, in which the computer program includes program codes for performing the method illustrated in the flowchart. In such embodiment, the computer programs may be downloaded and installed from a network through the communication section 609 and/or installed from the removable medium 611.

The computer-readable medium includes permanent and non-permanent, removable and non-removable media, which can realize the information storage by any method or technique. The information can be computer readable instructions, data structures, program modules or other data. An example of the computer storage medium includes, but not limited to, a phase change memory (PRAM), a static random access memory (SRAM), a dynamic random access memory (DRAM), other types of random access memory (RAM), a read-only memory (ROM), an electrically-erasable programmable read-only memory (EEPROM), a flash memory or other memory techniques, a compact disk read only memory (CD-ROM), a digital versatile disc (DVD) or other optical storages, magnetic cassette tapes, magnetic diskettes or other magnetic storage device or any other non-transmission medium, which can be configured to the storage of information accessible to a computing device. According to the definitions herein, the computer readable medium does not include any temporary computer readable media (transitory media), such as modulated data signal and carrier fluctuation.

For the convenience of description, the foregoing apparatus is described by being divided into various units in terms of functions. Of course, the functions of the units may be implemented in one or more pieces of software and/or hardware during the implementation of the present disclosure.

The present disclosure is described with reference to a flowchart and/or a block diagram of the method, apparatus (system) and computer program product according to the embodiments of the present disclosure. It shall be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce device for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

Further to be noted, the term "comprise", "include" or any other variant intends to cover the non-exclusive inclusions, so that a process, a method, a commodity or a device including a series of elements include not only those elements, but also other elements not explicitly listed, or further include inherent elements of such process, method, commodity or device. In a case where there is no further limitation, the elements defined by a sentence "comprising a ..." do not exclude other identical elements existing in the process, method, commodity or device comprising the elements.

The acquisition, storage, use, processing, etc. of the data in the technical solutions of the present disclosure are in compliance with the relevant provisions of the Chinese national laws and regulations.

Those skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present invention can take the form of a computer program product implemented on one or more computer usable storage mediums (including, but not limited to, a magnetic disc memory, CD-ROM, optical storage, etc.) containing therein computer usable program codes.

The present disclosure may be described in the general context of computer executable instructions executed by the computer, e.g., the program module. In general, the program module includes routine, program, object, component, data structure, etc. executing a particular task or realizing a particular abstract data type. The present disclosure may also be put into practice in the distributed computing environments where tasks are executed by remote processing devices connected through a communication network. In the distributed computing environments, the program modules may be located in the local and remote computer storage medium including the storage device.

The embodiments herein are all described in a progressive manner, and the same or similar parts of the embodiments can refer to each other. Each embodiment lays an emphasis on its distinctions from other embodiments. In particular, the system embodiment is simply described since it is substantially similar to the method embodiment, and please refer to the descriptions of the method embodiment for the relevant part.

Those described above are just embodiments of the present disclosure, rather than limitations thereto. For those skilled in the art, the present disclosure may have various amendments or variations. Any amendment, equivalent substitution, improvement, etc. made under the spirit and principle of the present disclosure should fall within the scope of the claims of the present disclosure.

**Claims**

1.  An optical element inspection method, comprising:

collecting point cloud data of an optical element under inspection;
performing fitting and reconstruction according to the point cloud data to obtain freeform surface data;
performing simulation calculation on the freeform surface data to obtain a virtual image tested pattern; and
performing quality inspection according to the virtual image tested pattern to obtain a quality inspection result of the optical element under inspection.

2. The optical element inspection method according to claim 1, wherein the collecting point cloud data of the optical element under inspection comprises:
scanning and measuring, by using a three-dimensional imaging technique, a surface of the optical element under inspection with a preset scanning area and data volume to obtain the point cloud data.

3. The optical element inspection method according to claim 2, further comprising:

scanning and measuring the surface of the optical element under inspection and/or different areas of the surface of the optical element under inspection for multiple times with different angles to obtain a plurality of groups of point cloud data; and
performing data stitching on the plurality of groups of point cloud data to obtain stitched point cloud data.

4. The optical element inspection method according to claim 1, wherein before the performing fitting and reconstruction according to the point cloud data to obtain the freeform surface data, the method further comprises:
preprocessing the point cloud data to obtain preprocessed point cloud data.

5. The optical element inspection method according to claim 1, wherein the performing fitting and reconstruction according to the point cloud data to obtain freeform surface data comprises:
performing fitting and reconstruction on a freeform surface following preset surface fitting parameters according to the point cloud data through preset design software to obtain the freeform surface data.

6. The optical element inspection method according to claim 5, wherein the surface fitting parameters comprise a tolerance value, a surface horizontal order and a surface vertical order.

7. The optical element inspection method according to claim 6, wherein a value range of the tolerance value is 1 time to 10 times of a scanning and measurement precision, preferably 2 times to 5 times.

8. The optical element inspection method according to claim 6, wherein

a value range of the surface horizontal order ranges is 3 orders to 8 orders, and
a value range of the surface vertical order ranges is 3 orders to 8 orders.

9. The optical element inspection method according to claim 5, wherein data types of the freeform surface comprise a hyperbolic surface, a composite surface, an XY polynomial surface, a trapezoidal distortion correction surface, a Forbes surface, a Zernike polynomial surface, a Gaussian basis function composite surface, a non-uniform rational B-spline surface, a segmented annular surface, and a stitched aspheric surface.

10. The optical element inspection method according to claim 1, wherein before the performing simulation calculation on the freeform surface data to obtain the virtual image tested pattern, the method further comprises:

verifying the freeform surface data according to a preset verification strategy; and
if the verification is successful, continuing the step of performing simulation calculation on the freeform surface data to obtain the virtual image tested pattern.

11. The optical element inspection method according to claim 10, wherein the freeform surface data comprises a curvature radius value, and the verification strategy comprises a set minimum curvature radius; and the verifying the freeform surface data according to the preset verification strategy comprises:

determining that the verification is failed if the curvature radius value is less than the minimum curvature radius; and
determining that the verification is successful if the curvature radius value is greater than or equal to the minimum curvature radius.

12. The optical element inspection method according to claim 10, wherein the freeform surface data comprises a deviation value of each sample point in the point cloud data, and the verification strategy comprises a ratio threshold; the verifying the freeform surface data according to the preset verification strategy comprises:

comparing the deviation value of each sample point with a tolerance value in surface fitting parameters, and counting the number of sample points with the deviation value greater than the tolerance value;
obtaining a deviation ratio according to the counted number of sample points and the total number of sample points;
determining that the verification is failed if the deviation ratio is greater than the ratio threshold; and
determining that the verification is successful if the deviation ratio is less than or equal to the ratio threshold.

13. The optical element inspection method according to claim 1, wherein the performing simulation calculation on the freeform surface data to obtain the virtual image tested pattern comprises:
performing simulation calculation on the freeform surface data according to preset simulation input data by preset simulation software, to obtain the virtual image tested pattern.

14. The optical element inspection method according to claim 13, wherein the simulation input data comprises a position and a preset pattern of an image generation unit, a camera distribution position, a mirror group, a rotation mechanism and a rotation angle, a size and a position of a virtual image plane;
the performing simulation calculation on the freeform surface data according to preset simulation input data by preset simulation software, to obtain the virtual image tested pattern comprises:

using a light point on the preset pattern of the image generation unit, according to the principle of light reflection and refraction, light of the light point is projected from the position of the image generation unit through the mirror group controlled by the rotation mechanism and the optical element under inspection, and finally to the camera distribution position;
obtaining a virtual image point position according to a virtual image imaging principle; and
obtaining the virtual image tested pattern on the virtual image plane according to a plurality of virtual image point positions.

15. The optical element inspection method according to claim 1, wherein the performing quality inspection according to the virtual image tested pattern to obtain the quality inspection result of the optical element under inspection comprises:

performing calculation on the virtual image tested pattern through a preset evaluation function corresponding to each evaluation index, to obtain an evaluation parameter corresponding to each evaluation index; and
determining the quality inspection result according to the evaluation parameter corresponding to each evaluation index and a preset evaluation criterion corresponding to each evaluation index.

16. The optical element inspection method according to claim 15, wherein the evaluation index comprises at least one selected from a horizontal straightness, a vertical straightness, a horizontal ghosting, a vertical ghosting, an image rotation, a gravity center deviation, a graphic tilt, a trapezoid degree, a zoom ratio, an image brightness, an image color, a binocular horizontal parallax, a binocular vertical parallax, a virtual image plane dynamic distortion and an eye box plane dynamic distortion.

17. The optical element inspection method according to claim 1, wherein the performing quality inspection according to the virtual image tested pattern to obtain the quality inspection result of the optical element under inspection comprises:
comparing the virtual image tested pattern with a standard virtual image pattern to determine the quality inspection result.

18. An optical element inspection system, comprising:

an acquisition unit configured to acquire point cloud data of an optical element under inspection;
a fitting and reconstruction unit configured to perform fitting and reconstruction according to the point cloud data to obtain freeform surface data;
a simulation unit configured to perform simulation calculation on the freeform surface data to obtain a virtual image tested pattern; and

a quality inspection unit configured to perform quality inspection according to the virtual image tested pattern to obtain a quality inspection result of the optical element under inspection.

19. The optical element inspection system according to claim 18, wherein
the acquisition unit is specifically configured to scan and measure, by using a three-dimensional imaging technique, a surface of the optical element under inspection with a preset scanning area and data volume to obtain the point cloud data.

20. The optical element inspection system according to claim 19, wherein the acquisition unit is further configured to scan and measure the surface of the optical element under inspection and/or different areas of the surface of the optical element under inspection for multiple times with different angles to obtain a plurality of groups of point cloud data; and the system further comprises:
a stitching unit configured to stitch the plurality of groups of point cloud data to obtain stitched point cloud data.

21. The optical element inspection system according to claim 18, further comprising:
a preprocessing unit configured to preprocess the point cloud data to obtain preprocessed point cloud data.

22. The optical element inspection system according to claim 18, wherein
the fitting and reconstruction unit is specifically configured to perform fitting and reconstruction of a freeform surface following preset surface fitting parameters according to the point cloud data through preset design software, to obtain freeform surface data.

23. The optical element inspection system according to claim 18, further comprising:
a verification unit configured to verify the freeform surface data according to a preset verification strategy; and if the verification is successful, trigger the simulation unit to continue simulation calculation on the freeform surface data to obtain the virtual image tested pattern.

24. The optical element inspection system according to claim 18, wherein
the simulation unit is specifically configured to perform simulation calculation on the freeform surface data according to preset simulation input data by preset simulation software, to obtain the virtual image tested pattern.

25. The optical element inspection system according to claim 18, wherein
the quality inspection unit is specifically configured to perform calculation on the virtual image tested pattern through a preset evaluation function corresponding to each evaluation index, to obtain an evaluation parameter corresponding to each evaluation index; and determine the quality inspection result according to the evaluation parameter corresponding to each evaluation index and a preset evaluation criterion corresponding to each evaluation index.

26. The optical element inspection system according to claim 18, wherein
the quality inspection unit is specifically configured to compare the virtual image tested pattern with a standard virtual image pattern to determine the quality inspection result.

27. An optical element inspection application, wherein a secondary image deviation of window glass, an optical distortion of window glass, a wedge angle or a head-up display image quality of window glass is inspected according to the optical element inspection method according to any one of claims 1 to 17.

28. A computer-readable medium, storing a computer program, wherein when executed by a processor, the program implements the optical element inspection method according to any one of claims 1 to 17.

29. A computer device, comprising a memory configured to store information including a program instruction, and a processor configured to control the execution of the program instruction, wherein when loaded and executed by the processor, the program instruction implements the optical element inspection method according to any one of claims 1 to 17.

30. A computer program product comprising a computer program/instruction, wherein when executed by a processor, the computer program/instruction implements the optical element inspection method according to any one of claims 1 to 17.

101 — Collecting point cloud data of an optical element under inspection

102 — Performing fitting and reconstruction according to the point cloud data to obtain freeform surface data

103 — Performing simulation calculation on the freeform surface data to obtain a virtual image tested pattern

104 — Performing quality inspection according to the virtual image tested pattern to obtain a quality inspection result of the optical element under inspection

FIG. 1

201 — Scanning and measuring, by using a three-dimensional imaging technique, a surface of an optical element under inspection with a preset scanning area and data volume to obtain the point cloud data

202 — Preprocessing the point cloud data to obtain preprocessed point cloud data

203 — Performing fitting and reconstruction on a freeform surface following preset surface fitting parameters according to the point cloud data through preset design software, to obtain freeform surface data

204 — Verifying the freeform surface data according to a preset verification strategy
The verification is failed

The verification is successful

205 — Performing simulation calculation on the freeform surface data according to preset simulation input data by preset simulation software, to obtain the virtual image tested pattern

206 — Performing calculation on the virtual image tested pattern through a preset evaluation function corresponding to each evaluation index, to obtain an evaluation parameter corresponding to each evaluation index

207 — Determining the quality inspection result according to the evaluation parameter corresponding to each evaluation index and a preset evaluation criterion corresponding to each evaluation index

FIG. 2

Line-1

$D1_{bottom}$

$D1_{peak}$

Line-2

$D2_{bottom}$

$D2_{peak}$

Line-3

$D3_{bottom}$

$D3_{peak}$

FIG. 3

11 — Acquisition Unit

12 — Fitting And Reconstruction Unit

13 — Simulation Unit

14 — Quality Inspection Unit

15 — Stitching Unit

16 — Processing Unit

17 — Verification Unit

FIG. 4

<u>600</u>

FIG. 5

## INTERNATIONAL SEARCH REPORT

International application No.

**PCT/CN2023/118521**

### A.    CLASSIFICATION OF SUBJECT MATTER

G01M11/02(2006.01)i；G01B9/00(2006.01)i；G01B11/24(2006.01)i；G01N21/00(2006.01)i；G02B27/01(2006.01)n；B60R1/00(2022.01)n；G06T7/80(2017.01)n；H04N17/00(2006.01)n

According to International Patent Classification (IPC) or to both national classification and IPC

### B.    FIELDS SEARCHED

Minimum documentation searched (classification system followed by classification symbols)

IPC：G01M11/-、G01B9/-、G01B11/-、G01N21/-、G02B27/-、B60R1/-、G06T7/-、H04N17/-；CPC：G01M11/0257

Documentation searched other than minimum documentation to the extent that such documents are included in the fields searched

Electronic data base consulted during the international search (name of data base and, where practicable, search terms used)

CNABS, CNTXT, ENTXTC, USTXTC, CNKI, Web of science: 福耀玻璃工业集团股份有限公司, 何长龙, 关金亮, 张灿忠, 张伟; 点云, 点 1d 数据, 点簇; 拟合, 重构, 重建, 建模, 插值; 面型, 形面, 曲面, 面形, 形貌, 轮廓; 光学, 镜; 虚像, 成 3d 像, 图像, 图案; Head+ 1w up 1w display+, Head+ 1w mount+ 1w display+; point 1d cloud?

### C.    DOCUMENTS CONSIDERED TO BE RELEVANT

| Category* | Citation of document, with indication, where appropriate, of the relevant passages | Relevant to claim No. |
|---|---|---|
| PX | CN 115791794 A (FUYAO GLASS INDUSTRY GROUP CO., LTD.) 14 March 2023 (2023-03-14)<br>      description, paragraphs [0002]-[0209], and figures 1-5 | 1-30 |
| PX | CN 116399834 A (TIANJIN UNIVERSITY) 07 July 2023 (2023-07-07)<br>      description, paragraphs [0002]-[0081], and figures 1-3 | 1-30 |
| X | 吕少波等 (LYU, Shaobo et al.). "数字电影反光镜3D扫描面形检测与评价 (Surface Inspection and Evaluation of Ellipsoidal Mirror Using 3D Scanning)"<br>应用光学 (Journal of Applied Optics), Vol. 34, No. 1, 31 January 2013 (2013-01-31), 117-122<br>ISSN: 1002-2082,<br>      pages 117-122 | 1-30 |
| X | CN 106768891 A (DALIAN ANCIENTO OPTICAL TECHNOLOGY CO., LTD.) 31 May 2017 (2017-05-31)<br>      description, paragraphs [0002]-[0062], and figures 1-4 | 1-30 |

☑ Further documents are listed in the continuation of Box C.          ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **06 November 2023** | **09 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/118521** |

### C. DOCUMENTS CONSIDERED TO BE RELEVANT

| Category* | Citation of document, with indication, where appropriate, of the relevant passages | Relevant to claim No. |
| --- | --- | --- |
| A | CN 111353997 A (NANJING UNIVERSITY OF SCIENCE AND TECHNOLOGY) 30 June 2020 (2020-06-30)<br>entire document | 1-30 |
| A | CN 114413788 A (WUHAN VISION3D TECHNOLOGY CO., LTD.) 29 April 2022 (2022-04-29)<br>entire document | 1-30 |
| A | CN 103258087 A (CHANGCHUN UNIVERSITY OF SCIENCE AND TECHNOLOGY) 21 August 2013 (2013-08-21)<br>entire document | 1-30 |
| A | CN 105783778 A (YUNNAN OBSERVATORIES, CHINESE ACADEMY OF SCIENCES) 20 July 2016 (2016-07-20)<br>entire document | 1-30 |
| A | CN 112146848 A (HUAWEI TECHNOLOGIES CO., LTD.) 29 December 2020 (2020-12-29)<br>entire document | 1-30 |
| A | CN 113375599 A (UNIVERSITY OF SHANGHAI FOR SCIENCE AND TECHNOLOGY) 10 September 2021 (2021-09-10)<br>entire document | 1-30 |
| A | CN 114815263 A (FUYAO GLASS INDUSTRY GROUP CO., LTD.) 29 July 2022 (2022-07-29)<br>entire document | 1-30 |
| A | CN 115060196 A (EXTERNAL ARRAY TECHNOLOGY (BEIJING) CO., LTD.) 16 September 2022 (2022-09-16)<br>entire document | 1-30 |
| A | WO 2022044197 A1 (MITSUBISHI ELECTRIC CORP.) 03 March 2022 (2022-03-03)<br>entire document | 1-30 |

Form PCT/ISA/210 (second sheet) (July 2022)

## INTERNATIONAL SEARCH REPORT
### Information on patent family members

International application No.

**PCT/CN2023/118521**

| Patent document cited in search report | | | Publication date (day/month/year) | Patent family member(s) | | | Publication date (day/month/year) |
|---|---|---|---|---|---|---|---|
| CN | 115791794 | A | 14 March 2023 | None | | | |
| CN | 116399834 | A | 07 July 2023 | None | | | |
| CN | 106768891 | A | 31 May 2017 | None | | | |
| CN | 111353997 | A | 30 June 2020 | None | | | |
| CN | 114413788 | A | 29 April 2022 | None | | | |
| CN | 103258087 | A | 21 August 2013 | None | | | |
| CN | 105783778 | A | 20 July 2016 | None | | | |
| CN | 112146848 | A | 29 December 2020 | None | | | |
| CN | 113375599 | A | 10 September 2021 | None | | | |
| CN | 114815263 | A | 29 July 2022 | None | | | |
| CN | 115060196 | A | 16 September 2022 | None | | | |
| WO | 2022044197 | A1 | 03 March 2022 | JPWO | 2022044197 | A1 | 03 March 2022 |

Form PCT/ISA/210 (patent family annex) (July 2022)

**EP 4 607 171 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211473751